# EUROPEAN PATENT SPECIFICATION

(11) **EP 2 440 306 B1**
(45) Date of publication and mention of the grant of the patent: **24.03.2021**
(21) Application number: 10786347.4
(22) Date of filing: 08.06.2010
(51) Int. Cl.: B01D 35/04, F24H 1/18, C02F 1/00, F24H 1/00, F24H 9/20

(54) **WATER PURIFIER**
WASSERREINIGER
PURIFICATEUR D'EAU

(30) Priority: 08.06.2009 KR 20090050582; 29.09.2009 KR 20090092459
(43) Date of publication of application: 18.04.2012
(73) Proprietor: Woongjin Coway Co., Ltd., Choongcheongnam-do 314-895 (KR)
(72) Inventor: KANG, Byung-Il, Seoul 140-748 (KR); CHOI, Yu-Seung, Seoul 110-500 (KR); LEE, Jung-Hwan, Seoul 143-193 (KR); PARK, Byung-Kil, Seoul 152-767 (KR); CHO, Young-Gun, Gyeonggi-do 472-731 (KR); KIM, Do-Han, Seoul 138-220 (KR); SEO, Young-Ju, Goyang Gyeonggi-do 411-370 (KR)
(74) Representative: Nederlandsch Octrooibureau
(86) International application number: PCT/KR2010/003662
(87) International publication number: WO 2010/143864

(56) References cited:
- WO-A2-2009/064119
- JP-A- 2010 172 368
- KR-A- 20090 043 784
- KR-A- 20090 043 785
- KR-A- 20090 043 785
- KR-Y1- 200 344 660
- KR-Y1- 200 367 153
- KR-Y1- 200 367 153

## Description

### [Technical Field]

The present invention relates to a water purifier provided with a hot water function.

### [Background Art]

A water purifier is a device which filters raw water supplied from a water pipe or the like through a water purification filter and thereby produces purified water. Recently, a water purifier having a hot water function as well as the water purification function has been developed. The water purifier having a hot water function produces hot water by heating the produced purified water and provides the hot water. Such a water purifier includes a hot water tank for storing the produced hot water. When a user wants to use the hot water, the user may extract the hot water stored in the hot water tank by controlling a cock connected to the hot water tank.

The water stored in the hot water tank is periodically heated by a heater provided in the water purifier such that the heated water maintains a constant temperature even when a user does not use the water as well as when a user extracts and uses the water. For example, when the temperature of the hot water is set to 90°C , the heater is periodically operated to heat the hot water such that the temperature of the hot water is maintained steadily at 90°C at all times. Therefore, a user may extract the hot water having a temperature of 90°C at any time.

However, since the heater is periodically operated to maintain the temperature of the hot water at 90°C, the power consumption inevitably increases. In reality, consumers are reluctant to buy or use the water purifier having a hot water function, because of high electrical rates.

Furthermore, the heater is continuously operated even during night when the water purifier is not used, as long as power supply is not cut off. Therefore, electric power is not only wasted, and but sleep may also be disturbed by the noise of the heater. To solve such a problem in which electric power is wasted during the night time, Korean Patent Laid-Open Publication No. 2003-0073204 discloses a water purifier including an illumination sensor installed therein. Specifically, when the illumination of the surroundings sensed by the illumination sensor is higher than a predetermined level, a hot water function switch is turned on to enable the hot water function of the water purifier. When the illumination is lower than the predetermined level, the hot water switch is turned off to disable the hot water function.

In such a water purifier, however, although power consumption may be reduced during the night, power consumption still occurs because the heater is periodically operated while the water purifier is not used during the day time.

Furthermore, when the temperature is controlled, for example, when the temperature which has been set to 90°C is newly set to 80°C, the temperature of the entirety of the hot water within the hot water tank should be varied to the newly-set temperature. Therefore, it is not easy to control the temperature, which makes it difficult to rapidly react to a temperature requested by a user.

Furthermore, when the hot water tank is continuously filled with hot water, the inner wall of the hot water may corrode, or fur may adhere to the inner wall. Therefore, unsanitary conditions may occur.

Each of the documents KR 2009 0043785 A (Dl), KR 200 367 153 Y1 11 (D2), KR 2009 0043784 A (D3) and WO 2009/064119 A2 (D4) discloses an example of a water purifier. In particular, KR 2009 0043785 A discloses a water purifier comprising a purified water tank(20), a hot water tank (40) with a heater (55), a purified water supply pipe connecting both tanks, a hot water extraction port (95), a hot extraction valve (67,68,69), a manipulation unit (80) and a control unit (70) controlling the supply of purified water to the hot water tank and operating the heater.

### [Disclosure]

### [Technical Problem]

An aspect of the present invention provides a water purifier which is capable of reducing power consumption.

Another aspect of the present invention provides a water purifier which has a simple configuration and is easily controlled.

Another aspect of the present invention provides a water purifier including a hot water tank of which the inner wall does not corrode.

### [Technical Solution]

According to the present invention, there is provided a water purifier including: a purified water tank storing purified water; a hot water tank connected to the purified water tank to receive the purified water from the purified water tank and including a heater heating the received purified water; a purified water supply pipe connecting the purified water tank and the hot water tank; a purified water supply valve installed in the purified water supply pipe to open or close the purified water supply pipe; a hot water extraction port through which the water of the hot water tank is extracted; a hot water extraction valve opening or closing the hot water extraction port; a manipulation unit through which an extraction amount of hot water is inputted; and a control unit performing a control to supply the purified water of the purified water tank to the hot water tank and operating the heater to heat the water of the hot water tank, wherein when the extraction amount of hot water is inputted to the manipulation unit, the control unit is configured to control the purified water supply valve to supply the purified water of the purified water tank to the hot water tank by the extraction amount of hot water, the control unit is configured to operate the heater to heat the water of the hot water tank until the water of the hot water tank reaches a set extraction temperature, and the control unit is configured to control the hot water extraction valve to extract the extraction amount of hot water at the set extraction temperature through the hot water extraction port.

The manipulation unit may receive an extraction temperature of hot water which relates to the extraction temperature being set.

The water purifier may further include a temperature sensor installed in the hot water tank to sense the temperature of the water of the hot water tank.

The control unit may control the operation of the heater, based on a signal from the temperature sensor.

The water purifier may further include a display unit displaying the operation state of the water purifier. The control unit may calculate a time required for producing hot water on the basis of the temperature and amount of the water within the hot water tank, the extraction temperature, and a heating value of the heater, and display the required time on the display unit.

When the water of the hot water tank reaches the extraction temperature, the control unit may open a hot water extraction port of the hot water tank to discharge all the water of the hot water tank.

According to another embodiment of the present invention, a water purifier according to claim 1 comprises a memory unit readably storing an opening time of the purified water supply pipe depending on the amount of purified water to be supplied to the hot water tank; wherein the control unit is configured for setting the extraction amount of hot water to the amount of purified water to be supplied to the hot water tank when the extraction amount of hot water is inputted through the manipulation unit, reading the opening time of the purified water supply pipe corresponding to the amount of purified water to be supplied to the hot water tank from the memory unit, and opening the purified water supply pipe during the specified opening time.

The memory unit may readably store the opening time of the purified water supply pipe depending on the amount of purified water to be supplied to the hot water tank and the water level of the purified water tank, and the control unit may set the extraction amount of hot water to the amount of purified water to be supplied to the hot water tank when the extraction amount of hot water is inputted through the manipulation unit, read the opening time of the purified water supply pipe corresponding to the amount of purified water to be supplied to the hot water tank and the water level of the purified water tank from the memory unit, and open the purified water supply pipe during the specified opening time.

When the purified water is supplied to the hot water tank, the control unit may operate the heater to heat the water of the hot water tank to a predetermined temperature.

The hot water tank may further include a temperature sensor sensing the temperature of the water within the hot water tank, the memory unit may readably store a temperature increase rate depending on the amount of the water within the hot water tank when the heater is driven, and the control unit may receive a temperature signal from the temperature sensor while the heater is driven, calculate a temperature increase rate, read an amount of water of the hot water tank corresponding to the calculated temperature increase rate from the memory unit, and compare the read amount of water of the hot water tank with the extraction amount of hot water inputted through the manipulation unit to determine a difference therebetween.

The hot water tank may further include a hot water extraction port through which the water of the hot water tank is extracted and a hot water extraction valve opening or closing the hot water extraction port. When the read amount of water of the hot water tank is larger than the extraction amount of hot water inputted through the manipulation unit, the control unit may perform a control to extract only the extraction amount of hot water inputted through the manipulation unit through the hot water extraction port.

The water remaining after the extraction through the hot water extraction port may be discharged to the outside.

The memory unit may readably store the opening time of the hot water extraction port depending on the amount of hot water extracted from the hot water tank, and the control unit may read the opening time of the hot water extraction port corresponding to the extraction amount of hot water inputted through the manipulation unit from the memory unit, and opens the hot water extraction port during the specified opening time.

When the read amount of water of the hot water tank is smaller than the extraction amount of hot water inputted through the manipulation unit, the control unit may open the purified water supply pipe such that an amount of water corresponding to the difference is supplied to the hot water tank.

When the extraction amount of hot water is inputted to the manipulation unit, the control unit may subtract the amount of water remaining in the hot water tank from the extraction amount of hot water, and set the value obtained by the subtraction to the amount of purified water to be supplied to the hot water tank.

The hot water tank may further include a hot water extraction port through which the water of the hot water tank is extracted and a hot water extraction valve opening or closing the hot water extraction port, the memory unit may readably store an opening time of the hot water extraction port depending on the amount of hot water extracted from the hot water tank, and the control unit may measure an opening time of the hot water extraction port when the hot water extraction port is opened, read an extraction amount of hot water corresponding to the opening time of the hot water extraction port from the memory unit, and compare the read extraction amount of hot water with the extraction amount of hot water inputted through the manipulation unit to determine the amount of water remaining in the hot water tank.

### [Advantageous Effects]

The water purifier according to the embodiments of the present invention produces only an amount of hot water required by a user. Therefore, the power consumption of the water purifier decreases in comparison with a conventional water purifier which continuously operates a heater to maintain the temperature of hot water within a hot water tank at a constant temperature.

Furthermore, the water purifier according to the related art should control the temperature of all the hot water stored in the hot water tank. However, the water purifier according to the embodiments of the present invention heats only a necessary amount of hot water to a desired temperature. Therefore, it is quick and easy to control the temperature of the hot water.

Furthermore, since the hot water tank of the water purifier according to the related art is filled with hot water, the inner wall of the hot water tank may corrode, or fur may adhere to the inner wall. Therefore, unsanitary conditions may occur. However, since the hot water tank of the water purifier according to the present invention is empty when hot water is not used, the inner wall of the hot water tank does not corrode.

Furthermore, the opening time of the purified water supply pipe is controlled to simply control the amount of water introduced into the hot water tank, and simultaneously, the temperature increase rate is measured while the hot water is heated, in order to correct the amount of water within the hot water tank. Therefore, it is possible to provide an accurate amount of hot water to a user without using a water level sensor.

### [Description of Drawings]

The above and other aspects, features and other advantages of the present invention will be more clearly understood from the following detailed description taken in conjunction with the accompanying drawings, in which:
FIG. 1 is a block diagram illustrating the configuration of a water purifier according to a first embodiment of the present invention;
Fig. 2 is a block diagram illustrating a connection network of a control unit of the water purifier according to the first embodiment of the present invention;
FIG. 3 is a block diagram illustrating the configuration of a water purifier according to a second embodiment of the present invention; and
FIG. 4 is a block diagram illustrating a connection network of a control unit of the water purifier according to the second embodiment of the present invention.

### [Best Mode]

### [First Embodiment]

Exemplary embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. Like reference numerals in the drawings denote like elements, and thus their description will be omitted.

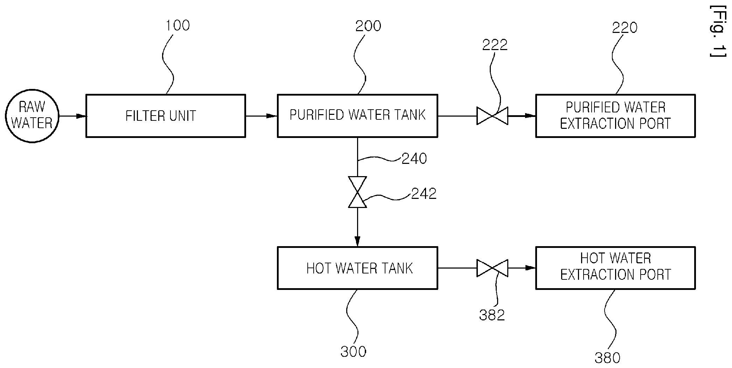

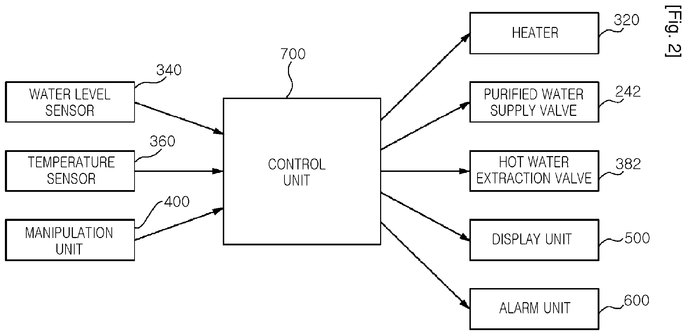

FIG. 1 is a block diagram illustrating the configuration of a water purifier according to a first embodiment of the present invention. Fig. 2 is a block diagram illustrating a connection network of a control unit of the water purifier according to the first embodiment of the present invention.

Referring to FIGS. 1 and 2, raw water such as tap water is filtered through a filter unit 100 including a plurality of filters, and then introduced into a purified water tank 200. The purified water tank 200 is filled with the purified water. A user's manipulation may open a purified water extraction valve 222 provided at a purified water extraction port 220 such that the user directly extracts the purified water, or the purified water may be introduced into the hot water tank 300 and then heated and extracted.

The hot water tank 300 includes a heater 320 for heating the water stored in the hot water tank 300. A band heater or an immersion heater may be used as the heater 320. To increase the efficiency of heat transmission, the immersion heater may be used, including a heating section which is directly contacted with water. In terms of sanitation, however, the band heater may be used, including a heating section which is mounted outside the hot water tank so as not to be contacted with water. The heater 320 may be connected to a control unit 700 to control the operation of the heater 320. The hot water tank 300 may include a water level sensor 340 and a temperature sensor 360 installed therein. Both sensors are connected to the control unit 700 and transmit signals related to the water level and the temperature to the control unit 700.

Between the purified water tank 200 and the hot water tank 300, a purified water supply pipe 240 connecting the purified water tank 200 and the hot water tank 300 is installed to supply the purified water of the purified water tank 200 to the hot water tank 300. The purified water supply pipe 240 may include a purified water supply valve 242 for opening or closing the purified water supply pipe 240. The purified water supply valve 242 may be connected to the control unit 700 and opened or closed in accordance with a signal from the control unit 700 to control the supply of the purified water to the hot water tank 300. The purified water supply valve 242 may include a solenoid valve which is opened or closed in accordance with an electrical signal of the control unit 700.

The hot water tank 300 includes a hot water extraction valve 382 installed at the hot water extraction port 380. The hot water extraction valve 382 may be connected to the control unit 700 and opened or closed in accordance with a signal from the control unit 700 to control the extraction of the hot water. The hot water extraction valve 382 may include a solenoid valve which is opened or closed in accordance with an electrical signal of the control unit 700.

The control unit 700 may be connected to a manipulation unit 400 for receiving a command from a user and receive a signal from the manipulation unit 400. The manipulation unit 400 may include a keypad which facilitates a user's manipulation, and may be installed on the front side of the water purifier. The manipulation unit 400 includes a variety of buttons related to the functions of the water purifier. In particular, the manipulation unit 400 includes buttons through which a necessary extraction amount of hot water at a specific temperature may be inputted.

The water purifier may further include a display unit 500 installed on the front side thereof. The display unit 500 may be connected to the control unit 700, and display a variety of parameters related to the operation state of the water purifier, in accordance with a signal of the control unit 700. In particular, the display unit 500 may display the amount and temperature of hot water and a time required for heating hot water.

The water purifier may further include an alarm unit 600. The alarm unit 600 may be connected to the control unit 700 and perform an alarm function in accordance with a signal of the control unit 700. In particular, when the production of hot water has been completed, the alarm unit 600 may perform the alarm function to inform a user that the production of hot water has been completed. As a method of the alarm function, a well-known method may be used, which is capable of attracting a user's attention visually or auditorily.

Next, a method for operating the water purifier according to the first embodiment of the present invention will be described.

Raw water such as tap water is filtered through the filter unit 100 and then stored in the purified water tank 200. The water stored in the purified water tank 200 may be directly extracted through the purified water extraction port 220 or may be introduced into the hot water tank 300 and then heated and extracted.

When a user wants to directly extract and use the water of the purified water tank 200, the user may open the purified water extraction valve 222 to extract the purified water.

When a user wants to extract and use hot water, the user may hold down a key provided in the manipulation unit 400 to input a desired amount and temperature of hot water. After the input is completed, the user holds down an enter key. For example, the extraction amount of hot water may be set to 120 cc, and the extraction temperature may be set to 94°C .

The extraction amount and temperature inputted by the user are transferred to the control unit 700. The control unit 700 receiving the extraction amount and temperature of hot water transmits a signal to the purified water supply valve 242 to open the purified water supply valve 242. As the purified water supply valve 242 is opened, the purified water within the purified water tank 200 is supplied to the hot water tank 300. The water level sensor 340 inside the hot water tank 300 senses the amount of water stored in the hot water tank 300 and transmits a water level signal to the control unit 700. For example, when a plurality of water level sensors 340 are disposed vertically at constant intervals in the hot water tank 300, the amount of water stored in the hot water tank 300 may be calculated by an operation of the water level of the hot water tank 300 sensed by the water level sensors 340 and the previously-known area of the hot water tank 300. Furthermore, when a water level sensor 340 capable of sensing various water levels of the hot water tank 300 is used, the amount of water stored in the hot water tank 300 may be calculated by an operation of the water level sensed by the water level sensor 340 and the previously-known area of the hot water tank 300.

The control unit 700 may determine whether or not the amount of water has reached the extraction amount, based on the water level signal transmitted from the water level sensor 340. When it is determined that the amount of water has reached the extraction amount (for example, 120 cc), the control unit 700 transmits a signal to the purified water supply valve 242 to close the purified water supply valve 242.

The control unit 700 transmits a signal to operate the heater 320. The heater 320 may be operated after the hot water tank 300 is completely filled with water. However, to rapidly heat the water, the heater 320 may be operated at the same time as the water is supplied to the hot water tank 300.

The control unit 700 receives a signal related to the temperature of the hot water from the temperature sensor 360 installed in the hot water tank 300. The control unit 700 calculates a time required for producing a necessary amount of hot water, based on the temperature and amount of the water stored in the hot water tank 300, the extraction temperature, and the heating value of the heater 320. The control unit 700 transmits a signal to display the calculated time and the extraction amount and temperature on the display unit 500. Therefore, the user may check the time required for producing the hot water as well as the extraction amount and temperature inputted by the user through the information displayed on the display unit 500. The control unit 700 calculates a time required for producing a necessary amount of hot water at a predetermined period, for example, every two or three seconds and updates the information displayed on the display unit 500. Therefore, the control unit 700 may inform the user of information on the waiting time in real time.

The control unit 700 may determine whether or not the temperature of the hot water has reached the extraction temperature, based on the temperature signal transmitted from the temperature sensor 360. When it is determined that the temperature of the hot water has reached the extraction temperature (for example, 94°C), the control unit 700 transmits a signal to the heater 320 to stop the operation of the heater 320. Furthermore, the control unit 700 transmits a signal to the alarm unit 600 to perform the alarm function. Then, the user may be informed that the production of the hot water has been completed.

After the operation of the heater 320 is stopped and the user is informed of the production completion through the alarm unit 600, the control unit 700 transmits a signal to the hot water extraction valve 382 to open the hot water extraction valve 382. Then, the hot water within the hot water tank 300 may be extracted.

### [Second Embodiment]

Hereinafter, a water purifier according to a second embodiment of the present invention will be described with reference to the accompanying drawings. The water purifier according to the second embodiment of the present invention is configured to provide information on the amount of water stored in a hot water tank without using a water level sensor or a flow meter. Since the water level sensor is typically formed of a molding product, the water level sensor cannot be mounted because of the surface temperature of the hot water tank. The flow meter may exhibit a high error rate when measuring a low flow rate.

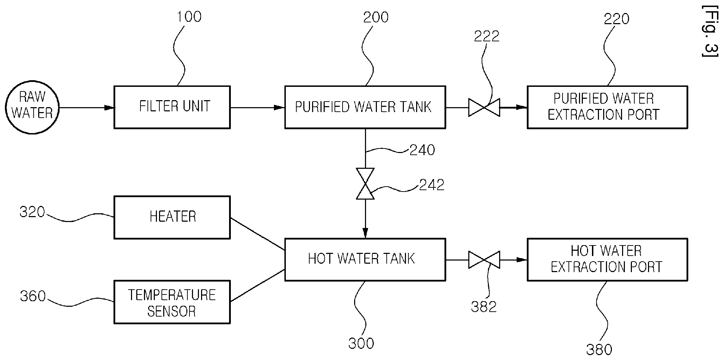

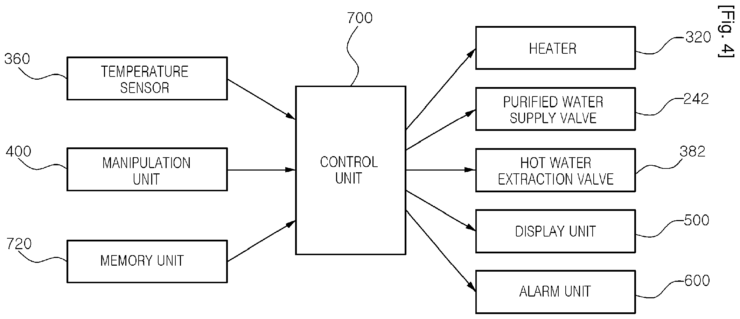

FIG. 3 is a block diagram illustrating the configuration of the water purifier according to the second embodiment of the present invention. FIG. 4 is a block diagram illustrating a connection network of a control unit of the water purifier according to the second embodiment of the present invention.

Referring to FIGS. 3 and 4, raw water such as tap water is filtered through a filter unit 100 including a plurality of filters and then introduced into a purified water tank 200, as in the first embodiment. The purified water tank 200 is filled with the purified water. Depending on a user's manipulation, a purified water extraction valve 222 may be opened to extract the purified water through a purified water extraction port 220, or the purified water may be introduced into the hot water tank 300 and then heated and extracted.

The hot water tank 300 includes a heater 320 for heating the water stored in the hot water tank 300. As described above in the first embodiment, a band heater or an immersion heater may be used as the heater 320. The immersion heater including a heating section which is directly contacted with water may be used to increase the efficiency of heat transmission. In terms of sanitation, however, the band heater may be used, including a heating section which is mounted outside the hot water tank so as not to be contacted with water. The heater 320 may be connected to a control unit 700 to control the operation of the heater 320. The hot water tank 300 further includes a temperature sensor 360 to transmit a temperature signal to the control unit 700.

Between the purified water tank 200 and the hot water tank 300, a purified water supply pipe 240 connecting the purified water tank 200 and the hot water tank 300 is installed to supply the purified water of the purified water tank 200 to the hot water tank 300, as in the first embodiment. The purified water supply pipe 240 includes a purified water supply valve 242 to open or close the purified water supply pipe 240. The purified water supply valve 242 may be connected to the control unit 700 such that the operation of the purified water supply valve 242 may be controlled in accordance with a signal from the control unit 700.

The hot water tank 300 may include a hot water extraction port 380 through which the hot water is discharged, as in the first embodiment. The hot water extraction port 380 may be opened or closed by a hot water extraction valve 382. The hot water extraction valve 382 may be connected to the control unit 700 such that the operation of the hot water extraction valve 382 is controlled in accordance with a signal from the control unit 700. Alternatively, the hot water extraction valve 382 may be manually operated by a user.

The hot water tank 300 may further include a drain (not shown) through which the water remaining after the extraction through the hot water extraction port 380 is discharged to the outside.

The water purifier includes a manipulation unit 400 which is provided to receive a command from a user, as in the first embodiment. The manipulation unit 400 is connected to the control unit 700 and transfers the received command to the control unit 700. The manipulation unit 400 may include a keypad which facilitates a user's manipulation and is provided on the front side of the water purifier. The manipulation unit 400 includes a variety of buttons related to the functions of the water purifier. In particular, the manipulation unit 400 includes a button through which a necessary extraction amount and temperature of hot water may be inputted.

The water purifier may further include a display unit 500 installed on the front side thereof, as in the first embodiment. The display unit 500 may be connected to the control unit 700 and display a variety of parameters related to the operation states of the water purifier in accordance with a signal of the control unit 700. In particular, the display unit 500 is configured to display the amount and temperature of hot water and a time required for heating the hot water.

The water purifier may further include an alarm unit 600, as in the first embodiment. The alarm unit 600 may be connected to the control unit 700 and perform an alarm function in accordance with a signal of the control unit 700. In particular, when the production of hot water is completed, the alarm unit 600 may perform the alarm function to inform a user that the production of the hot water has been completed. As a method of the alarm function, a well-known method may be used, which is capable of attracting a user's attention visually or auditorily.

The water purifier may further include a memory unit 720 which is configured to store various pieces of data related to the operations of the water purifier and connected to the control unit 700 to provide necessary data to the control unit 700.

In particular, the memory unit 720 readably stores an opening time of the purified water supply pipe 240 depending on the amount of purified water to be supplied to the hot water tank 300 and the water level of the purified water tank 200.

For example, as described in the following table, the opening times of the purified water supply pipe 240 are stored in the memory unit 720.

| | Highest water level | Intermediate water level | Lowest water level |
|---|---|---|---|
| 500cc | 21 seconds | 24 seconds | 26 seconds |

Referring to the above table, 200cc and 500cc represent the amount of purified water supplied to the hot water tank 300, the highest water level, the intermediate water level, and the lowest water level represent a water level of the purified water tank 200, and the times recorded by the unit of second represent an opening time of the purified water supply pipe 240. The values of the above table were obtained by actual measurements, and may differ depending on the types of water purifiers. The amount of purified water to be supplied to the hot water tank 300 and the water level of the purified water tank 200 may be more finely divided and stored. In the above table, it can be seen that as the amount of purified water supplied to the hot water tank 300 is large and the water level of the purified water tank 200 is low, the opening time of the purified water supply pipe 240 gets longer.

The memory unit 720 readably stores a temperature increase rate depending on the amount of water of the hot water tank 300 when the heater 320 is operated to heat the water of the hot water tank 300.

For example, the temperature increase rate shown in the following graph is stored in the memory unit 720.

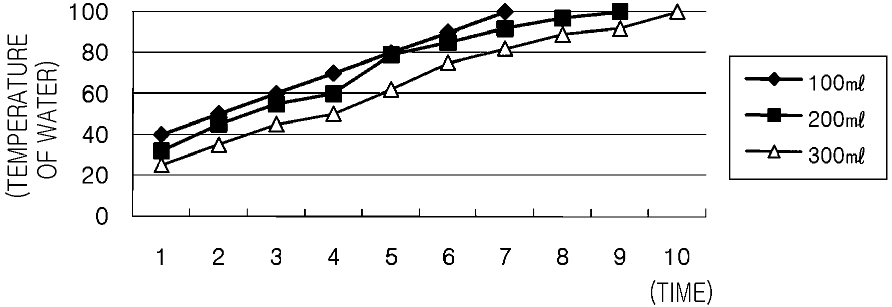

In the above graph, the horizontal axis represents time, and the vertical axis represents the temperature of water. On the time-temperature coordinates, the temperature increase rate of the water of the hot water tank 300 corresponds to the slope of a straight line connecting temperatures measured at every unit time. The above graph shows the temperature increase rates when the amounts of water are 100cc, 200cc, and 300cc, respectively. As the amount of water grows smaller, the temperature increase rate increases. The temperature increase rate may differ depending on the types of water purifiers. The amount of water may be more finely divided and stored.

The memory unit 720 readably stores the opening time of the hot water extraction port 380 depending on the amount of hot water to be extracted from the hot water tank 300. The extraction amount of hot water is proportional to the opening time of the hot water extraction port 380, and actually measured values are stored in the memory unit 720. As a matter of course, the opening time may be more finely divided and stored.

Next, a method for operating the water purifier according to the second embodiment of the present invention will be described.

Raw water such as tap water is filtered through the filter unit 100, and then stored in the purified water tank 200. The water stored in the purified water tank 200 may be extracted through the purified water extraction port 220 or may be introduced into the hot water tank 300 and then heated and extracted.

When a user wants to extract and use the purified water of the purified water tank 200, the user may open the purified water extraction valve 222 to extract the purified water.

When a user wants to extract and use hot water, the user may hold down a key provided in the manipulation unit 400 to input a desired amount and temperature of hot water. After the input is completed, the user holds down an enter key. For example, the extraction amount of hot water may be set to 200 cc, and the extraction temperature may be set to 90 .

The extraction amount and temperature inputted through the manipulation unit 400 are transferred to the control unit 700. The control unit 700 also receives a signal related to the water level of the purified water tank 200. The control unit 700 sets the extraction amount of hot water inputted through the manipulation unit 400 to the amount of purified water to be supplied to the hot water tank 300, reads the opening time (for example, 10 seconds) of the purified water supply pipe 240 corresponding to the amount of purified water to be supplied to the hot water tank 300 (for example, 200cc) and the water level of the water tank 200 (for example, the highest water level) from the memory unit 720, and then opens the purified water supply pipe 240 during the specified opening time. Since the purified water supply pipe 240 is opened for the predetermined time on the basis the data of the memory unit 720, an amount of purified water corresponding to the extraction amount of hot water inputted through the manipulation unit 400 is introduced into the hot water tank 300 from the purified water tank 200.

When the introduction of the purified water into the hot water tank 300 is completed, the control unit 700 drives the heater 320 to heat the water of the hot water tank 300 until the temperature of the heated water reaches the extraction temperature inputted through the manipulation unit 400.

The control unit 700 receives a signal related to the temperature of the water from the temperature sensor 360 installed in the hot water tank 300. The control unit 700 calculates a time required for producing a necessary amount of hot water, based on the temperature and amount of the water within the hot water tank 300, the extraction temperature, and the heating value of the heater 320. The control unit 700 transmits a signal to display the calculated time and the extraction amount and temperature on the display unit 500. Therefore, a user may check the time required for producing the hot water and the extraction amount and temperature of the hot water inputted through the manipulation unit 400, by seeing the information displayed on the display unit 500. The control unit 700 calculates a time required for producing a necessary amount of hot water at a predetermined period, for example, every two or three seconds, and updates the information displayed on the display unit 500. Therefore, it is possible to inform the user of the information related to the waiting time in real time.

While the water of the hot water tank 300 is heated, the control unit 700 periodically receives a temperature signal from the temperature sensor 360 to calculate a temperature increase rate, reads the amount of water of the hot water tank 300 corresponding to the calculated temperature increase rate from the memory unit 720, and compares the read amount of water of the hot water tank 300 with the extraction amount of hot water inputted through the manipulation unit 400 to calculate the difference therebetween.

As described above, the opening time of the purified water supply pipe 240 is controlled to introduce an amount of water corresponding to the extraction amount of hot water into the hot water tank 300. However, due to a malfunction of the purified water supply valve 242, a difference may occur between the amount of water introduced into the hot water tank 300 and the extraction amount of hot water inputted through the manipulation unit 400. Therefore, while the water of the hot water tank 300 is heated, the temperature increase rate is measured, and the difference is corrected by calculating the amount of water in the hot water tank 300 on the basis of the temperature increase rate.

When the amount of water of the hot water tank 300 which is calculated on the basis of the temperature increase rate is equal to the extraction amount of hot water inputted through the manipulation unit 400, that is, when there is no difference therebetween, the control unit 700 controls the heater 320 to heat the water of the hot water tank 300 until the heated water reaches the extraction temperature inputted through the manipulation unit 400, and then opens the hot water extraction port 380 such that all the water of the hot water tank 300 may be extracted. At this time, the control unit 700 transmits a signal to the alarm unit 600 to perform the alarm function. Then, the user may be informed that the production of the hot water is completed.

When the amount of water of the hot water tank 300 which is calculated on the basis of the temperature increase rate is larger than the extraction amount of hot water inputted through the manipulation unit 400, the control unit 700 performs a control to extract only an amount of water corresponding to the extraction amount of water inputted through the manipulation unit 400 through the hot water extraction port 380. After the corresponding amount of hot water is extracted through the hot water extraction port 380, the remaining water of which the amount corresponds to the difference may be left for the next hot water extraction or discharged to the outside through the drain for reasons of sanitation.

The control unit 700 reads the opening time of the hot water extraction port 380 corresponding to the extraction amount of hot water inputted through the manipulation unit 400 from the memory unit 720, and opens the hot water extraction port 380 during the specified opening time. Then, only an amount of hot water corresponding to the extraction amount of hot water inputted through the manipulation unit 400 may be extracted through the hot water extraction port 380.

Meanwhile, when the amount of water of the hot water tank 300 which is calculated on the basis of the temperature increase rate is smaller than the extraction amount of hot water inputted through the manipulation unit 400, the control unit 700 opens the purified water supply pipe 240 to supply an amount of water corresponding to the difference to the hot water tank 300. The supplied water is heated and then extracted through the hot water extraction port 380.

For example, it may be assumed that an amount of hot water to be extracted by a user is 200cc, and the water level of the purified water tank 200 is the highest water level. Furthermore, the purified water supply valve 242 may be opened for 10 seconds such that the hot water tank 300 is filled with water, and a temperature increase rate may be measured while the water of the hot water tank 300 is heated. When the measured temperature increase rate indicates a temperature increase rate of 220cc larger than 200cc, it may be determined that an amount difference corresponding to +20cc occurred. Therefore, after the production of the hot water with a desired temperature is completed, the control unit 700 controls the opening time of the hot water extraction port 380 such that only 200cc of hot water is discharged in a state in which 20cc of hot water remains, when the hot water is discharged through the hot water extraction port 380. The other hot water of 20cc may be stored in the hot water tank 300 or discharged to the outside through the drain. Meanwhile, when the measured temperature increase rate indicates a temperature increase rate of 180cc smaller than 200cc, it may be determined that an amount difference corresponding to -20cc occurred. Therefore, the control unit 700 reopens the hot water supply pipe 240 such that 20cc of hot water is additionally introduced into the hot water tank 300.

Meanwhile, since the desired extraction amount of water is supplied to the hot water tank 300 and all the water supplied to the hot water tank 300 is heated and then extracted, water does not exist in the hot water tank 300 at normal times. As described above, however, when the difference occurs or a user arbitrarily blocks the hot water extraction port 380 during the extraction of hot water, water may remain in the hot water tank 300. The remaining water may be left for the next hot water extraction or discharged to the outside for reasons of sanitation.

When the remaining water is left for the next hot water extraction, the control unit 700 subtracts the amount of water remaining in the hot water tank 300 from an extraction amount of hot water inputted through the manipulation unit 400, and then sets the value obtained by the subtraction to the amount of purified water to be supplied to the hot water tank 300. Then, when the water remaining in the hot water tank 300 and the water to be supplied to the hot water tank 300 are joined, an amount of hot water corresponding to the extraction amount of hot water inputted through the manipulation unit 400 may be stored in the hot water tank 300.

Meanwhile, to calculate the amount of water remaining in the hot water tank 300, the control unit 700 measures the opening time of the hot water extraction port 380 while the hot water extraction port 380 is opened. Then, the control unit 700 reads an extraction amount of hot water corresponding to the opening time of the hot water extraction port 380 from the memory unit 720, subtracts the read extraction amount of hot water from the extraction amount of hot water inputted through the manipulation unit 400, and determines the value obtained by the subtraction as the amount of water remaining in the hot water tank 300.

As such, when a user wants to use hot water, the user may input a necessary amount and temperature of hot water through the manipulation unit 400. Then, the user may extract and drink the hot water prepared in a desired condition.

The water purifier according to the embodiments of the present invention produces only an amount of hot water required by a user. Therefore, the power consumption of the water purifier decreases in comparison with a conventional water purifier which always operates a heater to maintain the temperature of hot water within a hot water tank to a constant temperature.

Furthermore, the water purifier according to the related art should control the temperature of the entirety of the hot water stored in the hot water tank. However, the water purifier according to the embodiments of the present invention heats only a necessary amount of hot water to a desired temperature. Therefore, it is quick and easy to control the temperature of the hot water.

Furthermore, since the hot water tank of the water purifier according to the related art is filled with hot water, the inner wall of the hot water tank may corrode, or fur may adhere to the inner wall. Therefore, unsanitary conditions may occur. However, since the hot water tank of the water purifier according to the present invention is empty when hot water is not used, the inner wall of the hot water tank does not corrode.

Furthermore, the opening time of the purified water supply valve 242 is controlled to simply control the amount of water introduced into the hot water tank 300, and simultaneously, the temperature increase rate is measured while the hot water is heated, in order to correct the amount of water within the hot water tank 300. Therefore, it is possible to provide an accurate amount of hot water to a user without using a water level sensor or a flow meter. Since a typical water level sensor is formed of a molding product, the water level sensor cannot be mounted because of the surface temperature of the hot water tank. Furthermore, the flow meter may exhibit a large error rate when measuring a low flow rate. However, the water purifier according to the embodiments of the present invention may control the amount of hot water by controlling the opening time of the valve.

Meanwhile, the hot water tank does not need to be mounted inside the water purifier body, but may be detachably mounted outside the water purifier body. When the hot water tank is mounted outside, it is easy to separate and clean the hot water tank. Furthermore, it is convenient to manage and repair the hot water tank.

While the present invention has been shown and described in connection with the exemplary embodiments, it will be apparent to those skilled in the art that modifications and variations can be made without departing from scope of the invention as defined by the appended claims.

## Claims

1. A water purifier comprising:
a purified water tank **(200)** storing purified water;
a hot water tank **(300)** connected to the purified water tank **(200)** to receive the purified water from the purified water tank **(200)** and comprising a heater **(320)** heating the received purified water;
a purified water supply pipe **(240)** connecting the purified water tank **(200)** and the hot water tank **(300);**
a purified water supply valve **(242)** installed in the purified water supply pipe **(240)** to open or close the purified water supply pipe **(240);**
a hot water extraction port **(380)** through which the water of the hot water tank **(300)** is extracted;
a hot water extraction valve **(382)** opening or closing the hot water extraction port **(380);**
a manipulation unit **(400)** through which an extraction amount of hot water is inputted; and
a control unit **(700)** for performing a control to supply the purified water of the purified water tank **(200)** to the hot water tank **(300)** and operating the heater to heat the water of the hot water tank **(300),**
wherein when the extraction amount of hot water is inputted to the manipulation unit **(400),** the control unit **(700)** is configured to control the purified water supply valve **(242)** to supply the purified water of the purified water tank **(200)** to the hot water tank **(300)** by the extraction amount of hot water, the control unit **(700)** is configured to operate the heater **(320)** until the water of the hot water tank **(300)** reaches a set extraction temperature, and the control unit **(700)** is configured to control the hot water extraction valve **(382)** to extract the extraction amount of hot water at the set extraction temperature through the hot water extraction port **(380).**

2. The water purifier of claim 1, wherein the extraction temperature being set is the extraction temperature of hot water inputted to the manipulation unit **(400).**

3. The water purifier of claim 2, further comprising a temperature sensor **(360)** installed in the hot water tank **(300)** to sense the temperature of the water of the hot water tank **(300),**
wherein the control unit **(700)** is configured to control the operation of the heater **(320),** based on a signal from the temperature sensor **(360).**

4. The water purifier of claim 3, further comprising a display unit **(500)** displaying the operation state of the water purifier,
wherein the control unit **(700)** is configured to calculate a time required for producing hot water on the basis of the temperature and amount of the water within the hot water tank **(300),** the extraction temperature, and a heating value of the heater **(320),** and is configured to display the required time on the display unit **(500).**

5. The water purifier of claim 2, wherein, when the water of the hot water tank **(300)** reaches the extraction temperature, the control unit **(700)** is configured to open a hot water extraction port **(380)** of the hot water tank **(300)** to discharge all the water of the hot water tank **(300).**

6. The water purifier of claim 1 further comprising
a memory unit **(720)** readably storing an opening time of the purified water supply pipe **(240)** depending on the amount of purified water to be supplied to the hot water tank **(300);** and
wherein the control unit **(700)** is configured to set the extraction amount of hot water to the amount of purified water to be supplied to the hot water tank **(300)** when the extraction amount of hot water is inputted through the manipulation unit **(400),** to read the opening time of the purified water supply pipe **(240)** corresponding to the amount of purified water to be supplied to the hot water tank **(300)** from the memory unit **(720),** and to open the purified water supply pipe **(240)** during the specified opening time.

7. The water purifier of claim 6, wherein the memory unit **(720)** readably stores the opening time of the purified water supply pipe **(240)** depending on the amount of purified water to be supplied to the hot water tank **(300)** and the water level of the purified water tank **(200),** and
the control unit **(700)** is configured to set the extraction amount of hot water to the amount of purified water to be supplied to the hot water tank **(300)** when the extraction amount of hot water is inputted through the manipulation unit **(400),** to read the opening time of the purified water supply pipe **(240)** corresponding to the amount of purified water to be supplied to the hot water tank **(300)** and the water level of the purified water tank **(200)** from the memory unit **(720),** and to open the purified water supply pipe **(240)** during the specified opening time.

8. The water purifier of claim 6 or 7, wherein, when the purified water is supplied to the hot water tank **(300),** the control unit **(700)** is configured to operate the heater **(320)** to heat the water of the hot water tank **(300)** to a predetermined temperature.

9. The water purifier of claim 8, wherein the hot water tank **(300)** further comprises a temperature sensor **(360)** sensing the temperature of the water within the hot water tank **(300),**
the memory unit **(720)** readably stores a temperature increase rate depending on the amount of the water within the hot water tank **(300)** when the heater **(320)** is driven, and
the control unit **(700)** is configured to receive a temperature signal from the temperature sensor **(360)** while the heater **(320)** is driven, to calculate temperature increase rate, to read an amount of water of the hot water tank **(300)** corresponding to the calculated temperature increase rate from the memory unit **(720),** and to compare the read amount of water of the hot water tank **(300)** with the extraction amount of hot water inputted through the manipulation unit **(400)** to determine a difference therebetween.

10. The water purifier of claim 9, wherein when the read amount of water of the hot water tank **(300)** is larger than the extraction amount of hot water inputted through the manipulation unit **(400),** the control unit **(700)** is configured to extract only the extraction amount of hot water inputted through the manipulation unit **(400)** through the hot water extraction port **(380).**

11. The water purifier of claim 10, wherein the water remaining after the extraction through the hot water extraction port **(380)** is discharged to the outside.

12. The water purifier of claim 10, wherein the memory unit **(720)** readably stores the opening time of the hot water extraction port **(380)** depending on the amount of hot water extracted from the hot water tank **(300)**, and
the control unit **(700)** is configured to read the opening time of the hot water extraction port **(380)** corresponding to the extraction amount of hot water inputted through the manipulation unit **(400)** from the memory unit **(720),** and to open the hot water extraction port **(380)** during the specified opening time.

13. The water purifier of claim 9, wherein, when the read amount of water of the hot water tank **(300)** is smaller than the extraction amount of hot water inputted through the manipulation unit **(400),** the control unit **(700)** is configured to open the purified water supply pipe **(240)** such that an amount of water corresponding to the difference is supplied to the hot water tank **(300).**

14. The water purifier of claim 6 or 7, wherein, when the extraction amount of hot water is inputted to the manipulation unit **(400),** the control unit **(700)** is configured to subtract the amount of water remaining in the hot water tank **(300)** from the extraction amount of hot water, and to set the value obtained by the subtraction to the amount of purified water to be supplied to the hot water tank **(300).**

15. The water purifier of claim 14, wherein the hot water tank **(300)** further comprises a hot water extraction port **(380)** through which the water of the hot water tank **(300)** is extracted and a hot water extraction valve **(382)** opening or closing the hot water extraction port **(380),**
the memory unit **(720)** readably stores an opening time of the hot water extraction port **(380)** depending on the amount of hot water extracted from the hot water tank **(300),** and
the control unit **(700)** is configured to measure an opening time of the hot water extraction port **(380)** when the hot water extraction port is opened, to read an extraction amount of hot water corresponding to the opening time of the hot water extraction port **(380)** from the memory unit **(720),** and to compare the read extraction amount of hot water with the extraction amount of hot water inputted through the manipulation unit **(400)** to determine the amount of water remaining in the hot water tank **(300).**

## Patentansprüche

1. Wasserreiniger, der aufweist:
einen Reinwassertank (200), der gereinigtes Wasser speichert;
einen Heißwassertank (300), der mit dem Reinwassertank (200) verbunden ist, um das gereinigte Wasser von dem Reinwassertank (200) zu erhalten, und einen Heizer (320) aufweist, der das erhaltene gereinigte Wasser heizt;
ein Reinwasserzuführrohr (240), das den Reinwassertank (200) und den Heißwassertank (300) verbindet;
ein Reinwasserzuführventil (242), das in dem Reinwasserzuführrohr (240) installiert ist, um das Reinwasserzuführrohr (240) zu öffnen oder zu schließen;
einen Heißwasserentnahmeanschluss (380), durch den das Wasser des Heißwassertanks (300) entnommen wird;
ein Heißwasserentnahmeventil (382), das den Heißwasserentnahmeanschluss (380) öffnet oder schließt;
eine Manipulationseinheit (400), durch die eine Entnahmemenge von heißem Wasser eingegeben wird; und
eine Steuereinheit (700) zum Durchführen einer Steuerung, um das gereinigte Wasser von dem Reinwassertank (200) zu dem Heißwassertank (300) zu führen, und zum Betreiben des Heizers, um das Wasser des Heißwassertanks (300) zu heizen,
wobei, wenn die Entnahmemenge von heißem Wasser in die Manipulationseinheit (400) eingegeben wird, die Steuereinheit (700) ausgestaltet ist, das Reinwasserzuführventil (242) durch die Entnahmemenge von heißem Wasser zu steuern, um das gereinigte Wasser von dem Reinwassertank (200) zu dem Heißwassertank (300) zu führen, wobei die Steuereinheit (700) ausgestaltet ist, den Heizer (320) zu betreiben, bis das Wasser des Heißwassertanks (300) eine gesetzte Entnahmetemperatur erreicht, und wobei die Steuereinheit (700) ausgestaltet ist, das Heißwasserentnahmeventil (382) zu steuern, um die Entnahmemenge von heißem Wasser bei der gesetzten Entnahmetemperatur durch den Heißwasserentnahmeanschluss (380) zu entnehmen.

2. Wasserreiniger nach Anspruch 1, wobei die Entnahmetemperatur, die gesetzt wird, die Entnahmetemperatur von heißem Wasser ist, die in die Manipulationseinheit (400) eingegeben wird.

3. Wasserreiniger nach Anspruch 2, wobei der Wasserreiniger ferner einen Temperatursensor (360) aufweist, der in dem Heißwassertank (300) installiert ist, um die Temperatur des Wassers des Heißwassertanks (300) zu erfassen,
wobei die Steuereinheit (700) ausgestaltet ist, den Betrieb des Heizers (320) basierend auf einem Signal von dem Temperatursensor (360) zu steuern.

4. Wasserreiniger nach Anspruch 3, wobei der Wasserreiniger ferner eine Anzeigeeinheit (500) aufweist, die den Betriebszustand des Wasserreinigers anzeigt,
wobei die Steuereinheit (700) ausgestaltet ist, eine Zeit, die benötigt wird, um heißes Wasser herzustellen, auf der Basis der Temperatur und Menge des Wassers innerhalb des Heißwassertanks (300), der Entnahmetemperatur und eines Heizwertes des Heizers (320) zu berechnen, und ausgestaltet ist, die benötigte Zeit auf der Anzeigeeinheit (500) anzuzeigen.

5. Wasserreiniger nach Anspruch 2, wobei, wenn das Wasser des Heißwassertanks (300) die Entnahmetemperatur erreicht, die Steuereinheit (700) ausgestaltet ist, einen Heißwasserentnahmeanschluss (380) des Heißwassertanks (300) zu öffnen, um all das Wasser des Heißwassertanks (300) abzuführen.

6. Wasserreiniger nach Anspruch 1, wobei der Wasserreiniger ferner aufweist
eine Speichereinheit (720), die eine Öffnungszeit des Reinwasserzuführrohrs (240) abhängig von der Menge von gereinigtem Wasser, das dem Heißwassertank (300) zuzuführen ist, lesbar speichert; und
wobei die Steuereinheit (700) ausgestaltet ist, die Entnahmemenge des heißen Wassers auf die Menge des gereinigten Wassers zu setzen, die dem Heißwassertank (300) zuzuführen ist, wenn die Entnahmemenge von heißem Wasser durch die Manipulationseinheit (400) eingegeben wird, die Öffnungszeit des Reinwasserzuführrohrs (240) entsprechend der Menge von gereinigtem Wasser, die dem Heißwassertank (300) zuzuführen ist, von der Speichereinheit (720) zu lesen, und das Reinwasserzuführrohr (240) während der angegebenen Öffnungszeit zu öffnen.

7. Wasserreiniger nach Anspruch 6, wobei die Speichereinheit (720) die Öffnungszeit des Reinwasserzuführrohrs (240) abhängig von der Menge des gereinigten Wassers, das dem Heißwassertank (300) zuzuführen ist, und den Wasserpegel des Tanks für gereinigtes Wasser (200) lesbar speichert, und
die Steuereinheit (700) ausgestaltet ist, die Entnahmemenge von heißem Wasser auf die Menge des gereinigten Wassers, das dem Heißwassertank (300) zuzuführen ist, zu setzen, wenn die Entnahmemenge von heißem Wasser durch die Manipulationseinheit (400) eingegeben wird,
die Öffnungszeit des Reinwasserzuführrohrs (240) entsprechend der Menge von gereinigtem Wasser, die dem Heißwassertank (300) zuzuführen ist, und dem Wasserpegel des Tanks für gereinigtes Wasser (200) von der Speichereinheit (720) zu lesen, und
das Reinwasserzuführrohr (240) während der angegebenen Öffnungszeit zu öffnen.

8. Wasserreiniger nach Anspruch 6 oder 7, wobei, wenn das gereinigte Wasser dem Heißwassertank (300) zugeführt wird, die Steuereinheit (700) ausgestaltet ist, den Heizer (320) zu betreiben, um das Wasser des Heißwassertanks (300) auf eine vorbestimmte Temperatur aufzuheizen.

9. Wasserreiniger nach Anspruch 8, wobei der Heißwassertank (300) ferner einen Temperatursensor (360) aufweist, der die Temperatur des Wassers innerhalb des Heißwassertanks (300) erfasst,
wobei die Speichereinheit (720) eine Temperaturanstiegsrate abhängig von der Menge des Wassers innerhalb des Heißwassertanks (300) lesbar speichert, wenn der Heizer (320) betrieben wird, und
wobei die Steuereinheit (700) ausgestaltet ist, ein Temperatursignal von dem Temperatursensor (360) zu erhalten, während der Heizer (320) betrieben wird, um eine Temperaturanstiegsrate zu berechnen, eine Menge von Wasser des Heißwassertanks (300) entsprechend der berechneten Temperaturanstiegsrate von der Speichereinheit (720) zu lesen, und die gelesene Menge von Wasser des Heißwassertanks (300) mit der Entnahmemenge von heißem Wasser, die durch die Manipulationseinheit (400) eingegeben wird, zu vergleichen, um eine Differenz zwischen ihnen zu bestimmen.

10. Wasserreiniger nach Anspruch 9, wobei, wenn die gelesene Menge von Wasser des Heißwassertanks (300) größer als die Entnahmemenge von heißem Wasser ist, die durch die Manipulationseinheit (400) eingegeben wird, die Steuereinheit (700) ausgestaltet ist, nur die Entnahmemenge von heißem Wasser, die durch die Manipulationseinheit (400) eingegeben wird, durch den Heißwasserentnahmeanschluss (380) zu entnehmen.

11. Wasserreiniger nach Anspruch 10, wobei das Wasser, das nach der Entnahme durch den Heißwasserentnahmeanschluss (380) verbleibt, nach außen abgeführt wird.

12. Wasserreiniger nach Anspruch 10, wobei die Speichereinheit (720) die Öffnungszeit des Heißwasserentnahmeanschlusses (380) abhängig von der Menge des heißen Wassers, das aus dem Heißwassertank (300) entnommen wird, lesbar speichert, und
wobei die Steuereinheit (700) ausgestaltet ist, die Öffnungszeit des Heißwasserentnahmeanschlusses (380) entsprechend der Entnahmemenge des heißen Wassers, die durch die Manipulationseinheit (400) eingegeben wird, von der Speichereinheit (720) zu lesen, und
den Heißwasserentnahmeanschluss (380) während der festgelegten Öffnungszeit zu öffnen.

13. Wasserreiniger nach Anspruch 9, wobei, wenn die gelesene Menge von Wasser des Heißwassertanks (300) kleiner als die Entnahmemenge des heißen Wassers ist, die durch die Manipulationseinheit (400) eingegeben wird, die Steuereinheit (700) ausgestaltet ist, das Reinwasserzuführrohr (240) so zu öffnen, dass eine Menge von Wasser entsprechend der Differenz dem Heißwassertank (300) zugeführt wird.

14. Wasserreiniger nach Anspruch 6 oder 7, wobei, wenn die Entnahmemenge von heißem Wasser in die Manipulationseinheit (400) eingegeben wird, die Steuereinheit (700) ausgestaltet ist, die Menge von Wasser, die in dem Heißwassertank (300) verbleibt, von der Entnahmemenge von heißem Wasser abzuziehen, und den Wert, der durch die Subtraktion erhalten wird, auf die Menge des gereinigten Wassers zu setzen, die dem Heißwassertank (300) zuzuführen ist.

15. Wasserreiniger nach Anspruch 14, wobei der Heißwassertank (300) ferner einen Heißwasserentnahmeauslass (380) aufweist, durch den das Wasser des Heißwassertanks (300) entnommen wird, und ein Heißwasserentnahmeventil (382), das den Heißwasserentnahmeanschluss (380) öffnet oder schließt,
wobei die Speichereinheit (720), die eine Öffnungszeit des Heißwasserentnahmeanschlusses (380) abhängig von der Menge von heißem Wasser, das von dem Heißwassertank (300) entnommen wird, lesbar speichert, und
wobei die Steuereinheit (700) ausgestaltet ist, eine Öffnungszeit des Heißwasserentnahmeanschlusses (380) zu messen, wenn der Heißwasserentnahmeanschluss geöffnet wird, eine Entnahmemenge von heißem Wasser entsprechend der Öffnungszeit des Heißwasserentnahmeanschlusses (380) von der Speichereinheit (720) zu lesen, und
die gelesene Entnahmemenge von heißem Wasser mit der Entnahmemenge von heißem Wasser, die durch die Manipulationseinheit (400) eingegeben wird, zu vergleichen, um die Menge von Wasser zu bestimmen, die in dem Heißwassertank (300) verbleibt.

## Revendications

1. Purificateur d'eau comprenant :
un réservoir d'eau purifiée (200) stockant de l'eau purifiée ;
un réservoir d'eau chaude (300) relié au réservoir d'eau purifiée (200) pour recevoir l'eau purifiée provenant du réservoir d'eau purifiée (200) et comprenant un dispositif de chauffage (320) chauffant l'eau purifiée reçue ;
un tuyau d'alimentation en eau purifiée (240) reliant le réservoir d'eau purifiée (200) et le réservoir d'eau chaude (300) ;
une vanne d'alimentation en eau purifiée (242) installée dans le tuyau d'alimentation en eau purifiée (240) pour ouvrir ou fermer le tuyau d'alimentation en eau purifiée (240) ;
un orifice d'extraction d'eau chaude (380) à travers lequel l'eau du réservoir d'eau chaude (300) est extraite ;
une vanne d'extraction d'eau chaude (382) ouvrant ou fermant l'orifice d'extraction d'eau chaude (380) ;
une unité de manipulation (400) par laquelle une quantité d'extraction d'eau chaude est entrée ; et
une unité de commande (700) pour réaliser une commande pour délivrer l'eau purifiée du réservoir d'eau purifiée (200) au réservoir d'eau chaude (300) et faire fonctionner le dispositif de chauffage pour chauffer l'eau du réservoir d'eau chaude (300),
dans lequel, lorsque la quantité d'extraction d'eau chaude est entrée dans l'unité de manipulation (400), l'unité de commande (700) est configurée pour commander la vanne d'alimentation en eau purifiée (242) pour délivrer l'eau purifiée du réservoir d'eau purifiée (200) au réservoir d'eau chaude (300) par la quantité d'extraction d'eau chaude, l'unité de commande (700) est configurée pour faire fonctionner le dispositif de chauffage (320) jusqu'à ce que l'eau du réservoir d'eau chaude (300) atteigne une température d'extraction définie, et l'unité de commande (700) est configurée pour commander la vanne d'extraction d'eau chaude (382) pour extraire la quantité d'extraction d'eau chaude à la température d'extraction définie à travers l'orifice d'extraction d'eau chaude (380).

2. Purificateur d'eau selon la revendication 1, dans lequel la température d'extraction définie est la température d'extraction d'eau chaude entrée dans l'unité de manipulation (400).

3. Purificateur d'eau selon la revendication 2, comprenant en outre un capteur de température (360) installé dans le réservoir d'eau chaude (300) pour détecter la température de l'eau du réservoir d'eau chaude (300), l'unité de commande (700) étant configurée pour commander le fonctionnement du dispositif de chauffage (320), sur la base d'un signal provenant du capteur de température (360).

4. Purificateur d'eau selon la revendication 3, comprenant en outre une unité d'affichage (500) affichant l'état de fonctionnement du purificateur d'eau, l'unité de commande (700) étant configurée pour calculer un temps nécessaire pour produire de l'eau chaude sur la base de la température et de la quantité d'eau à l'intérieur du réservoir d'eau chaude (300), de la température d'extraction et d'une valeur de chauffage du dispositif de chauffage (320), et étant configurée pour afficher le temps nécessaire sur l'unité d'affichage (500).

5. Purificateur d'eau selon la revendication 2, dans lequel, lorsque l'eau du réservoir d'eau chaude (300) atteint la température d'extraction, l'unité de commande (700) est configurée pour ouvrir un orifice d'extraction d'eau chaude (380) du réservoir d'eau chaude (300) pour décharger la totalité de l'eau du réservoir d'eau chaude (300).

6. Purificateur d'eau selon la revendication 1, comprenant en outre une unité de mémoire (720) stockant de manière lisible un temps d'ouverture du tuyau d'alimentation en eau purifiée (240) selon la quantité d'eau purifiée à délivrer au réservoir d'eau chaude (300) ; et l'unité de commande (700) étant configurée pour définir la quantité d'extraction d'eau chaude à la quantité d'eau purifiée à délivrer au réservoir d'eau chaude (300) lorsque la quantité d'extraction d'eau chaude est entrée par l'unité de manipulation (400), lire le temps d'ouverture du tuyau d'alimentation en eau purifiée (240) correspondant à la quantité d'eau purifiée à délivrer au réservoir d'eau chaude (300) à partir de l'unité de mémoire (720), et ouvrir le tuyau d'alimentation en eau purifiée (240) pendant le temps d'ouverture spécifié.

7. Purificateur d'eau selon la revendication 6, dans lequel l'unité de mémoire (720) stocke de manière lisible le temps d'ouverture du tuyau d'alimentation en eau purifiée (240) selon la quantité d'eau purifiée à délivrer au réservoir d'eau chaude (300) et le niveau d'eau du réservoir d'eau purifiée (200), et l'unité de commande (700) est configurée pour définir la quantité d'extraction d'eau chaude à la quantité d'eau purifiée à délivrer au réservoir d'eau chaude (300) lorsque la quantité d'extraction d'eau chaude est entrée par l'unité de manipulation (400), lire le temps d'ouverture du tuyau d'alimentation en eau purifiée (240) correspondant à la quantité d'eau purifiée à délivrer au réservoir d'eau chaude (300) et au niveau d'eau du réservoir d'eau purifiée (200) à partir de l'unité de mémoire (720), et ouvrir le tuyau d'alimentation en eau purifiée (240) pendant le temps d'ouverture spécifié.

8. Purificateur d'eau selon la revendication 6 ou 7, dans lequel, lorsque l'eau purifiée est délivrée au réservoir d'eau chaude (300), l'unité de commande (700) est configurée pour faire fonctionner le dispositif de chauffage (320) pour chauffer l'eau du réservoir d'eau chaude (300) à une température prédéterminée.

9. Purificateur d'eau selon la revendication 8, dans lequel le réservoir d'eau chaude (300) comprend en outre un capteur de température (360) détectant la température de l'eau à l'intérieur du réservoir d'eau chaude (300), l'unité de mémoire (720) stocke de manière lisible un taux d'augmentation de température selon la quantité d'eau à l'intérieur du réservoir d'eau chaude (300) lorsque le dispositif de chauffage (320) est actionné, et l'unité de commande (700) est configurée pour recevoir un signal de température provenant du capteur de température (360) tandis que le dispositif de chauffage (320) est actionné, calculer un taux d'augmentation de température, lire une quantité d'eau du réservoir d'eau chaude (300) correspondant au taux d'augmentation de température calculé à partir de l'unité de mémoire (720), et comparer la quantité lue d'eau du réservoir d'eau chaude (300) avec la quantité d'extraction d'eau chaude entrée par l'unité de manipulation (400) pour déterminer une différence entre elles.

10. Purificateur d'eau selon la revendication 9, dans lequel, lorsque la quantité lue d'eau du réservoir d'eau chaude (300) est plus grande que la quantité d'extraction d'eau chaude entrée par l'unité de manipulation (400), l'unité de commande (700) est configurée pour extraire uniquement la quantité d'extraction d'eau chaude entrée par l'unité de manipulation (400) à travers l'orifice d'extraction d'eau chaude (380).

11. Purificateur d'eau selon la revendication 10, dans lequel l'eau restant après l'extraction à travers l'orifice d'extraction d'eau chaude (380) est déchargée vers l'extérieur.

12. Purificateur d'eau selon la revendication 10, dans lequel l'unité de mémoire (720) stocke de manière lisible le temps d'ouverture de l'orifice d'extraction d'eau chaude (380) selon la quantité d'eau chaude extraite du réservoir d'eau chaude (300), et l'unité de commande (700) est configurée pour lire le temps d'ouverture de l'orifice d'extraction d'eau chaude (380) correspondant à la quantité d'extraction d'eau chaude entrée par l'unité de manipulation (400) à partir de l'unité de mémoire (720), et ouvrir l'orifice d'extraction d'eau chaude (380) pendant le temps d'ouverture spécifié.

13. Purificateur d'eau selon la revendication 9, dans lequel, lorsque la quantité lue d'eau du réservoir d'eau chaude (300) est plus petite que la quantité d'extraction d'eau chaude entrée par l'unité de manipulation (400), l'unité de commande (700) est configurée pour ouvrir le tuyau d'alimentation en eau purifiée (240) de telle sorte qu'une quantité d'eau correspondant à la différence est délivrée au réservoir d'eau chaude (300).

14. Purificateur d'eau selon la revendication 6 ou 7, dans lequel, lorsque la quantité d'extraction d'eau chaude est entrée dans l'unité de manipulation (400), l'unité de commande (700) est configurée pour soustraire la quantité d'eau restant dans le réservoir d'eau chaude (300) de la quantité d'extraction d'eau chaude, et définir la valeur obtenue par la soustraction à la quantité d'eau purifiée à délivrer au réservoir d'eau chaude (300).

15. Purificateur d'eau selon la revendication 14, dans lequel le réservoir d'eau chaude (300) comprend en outre un orifice d'extraction d'eau chaude (380) à travers lequel l'eau du réservoir d'eau chaude (300) est extraite et une vanne d'extraction d'eau chaude (382) ouvrant ou fermant l'orifice d'extraction d'eau chaude (380), l'unité de mémoire (720) stocke de manière lisible un temps d'ouverture de l'orifice d'extraction d'eau chaude (380) selon la quantité d'eau chaude extraite du réservoir d'eau chaude (300), et l'unité de commande (700) est configurée pour mesurer un temps d'ouverture de l'orifice d'extraction d'eau chaude (380) lorsque l'orifice d'extraction d'eau chaude est ouvert, lire une quantité d'extraction d'eau chaude correspondant au temps d'ouverture de l'orifice d'extraction d'eau chaude (380) à partir de l'unité de mémoire (720), et comparer la quantité lue d'extraction d'eau chaude avec la quantité d'extraction d'eau chaude entrée par l'unité de manipulation (400) pour déterminer la quantité d'eau restant dans le réservoir d'eau chaude (300).
